# EUROPÄISCHE PATENTSCHRIFT

(11) **EP 1 031 708 B1**
(45) Veröffentlichungstag und Bekanntmachung des Hinweises auf die Patenterteilung: **10.04.2002**
(21) Anmeldenummer: 00100894.5
(22) Anmeldetag: 18.01.2000
(51) Int. Cl.: F01N 3/08, F01N 3/20, F01N 3/28

(54) **Modul für Abgasanlagen**
Module for an exhaust gas system
Module pour système d'échappement

(30) Priorität: 25.02.1999 DE 29903382 U
(43) Veröffentlichungstag der Anmeldung: 30.08.2000
(73) Patentinhaber: HEINRICH GILLET GMBH & CO. KG, D-67480 Edenkoben (DE)
(72) Erfinder: Müller, Ralf, 76831 Billigheim-Ingenheim (DE); Müller, Benedikt, 67487 Maikammer (DE); Froese, Dietmar, 76889 Kapellen-Drusweiler (DE)
(74) Vertreter: Patentanwälte Möll und Bitterich

(56) Entgegenhaltungen:
- EP-A- 0 867 603
- DE-A- 2 303 773
- DE-A- 3 439 998
- DE-A- 4 218 834
- GB-A- 2 254 883

## Beschreibung

Die Erfindung betrifft Module für Abgasanlagen von Verbrennungsmotoren mit Benzin-Direkteinspritzung (GDI-Motoren) gemäß dem Oberbegriff des Anspruchs 1.

GDI-Motoren werden soweit möglich mit einem großen Luftüberschuss betrieben. In dieser Betriebsart entsteht sehr viel NOₓ, das durch den üblichen Dreiwege-Katalysator nicht beseitigt werden kann. Aus diesem Grunde sind den GDI-Motoren spezielle Speicherkatalysatoren nachgeschaltet. Diese haben die Eigenschaft, das im Magerbetrieb gebildete NOₓ für eine gewisse Zeitspanne, typisch 1 bis 2 Minuten, zu speichern. Anschließend muss der Katalysator regeneriert werden. Während dieser Zeitspanne, typisch 1 bis 3 Sekunden, schaltet die Motorelektronik den Motor in den Normalbetrieb.

Die handelsüblichen Speicherkatalysatoren funktionieren nur in einem Temperaturfenster zwischen 200 °C und 450 °C. Bei Temperaturen oberhalb 800 °C werden sie zerstört. Ein GDI-Motor erzeugt jedoch je nach Betriebszustand Abgastemperaturen bis zu 950 °C. Aus diesem Grund muss das Abgas zwischen Motor und Speicherkatalysator unter allen nur denkbaren Betriebsbedingungen unter 800 °C, vorzugsweise auf 200 bei 450 °C abgekühlt werden. Dies geschieht in speziellen Abgaskühlern.

Aus der DE 42 18 834 A ist eine Abgasanlage für einen Verbrennungsmotor mit einem Katalysator zur Aufbereitung der schädlichen Bestandteile des Abgases bekannt. Zwischen Motor und Katalysator warden die Abgase durch zwei parallele Rohrleitungen geführt, von denen die eine einen kleinen Durchmesser und geringe Wärmeverluste, die andere einen großen Durchmesser, große Wärmeverluste und eine Absperrklappe besitzt. Die beiden Abgasrohre münden direkt in den Eingangskonus des Katalysatorgehäuses.

Es ist bekannt, dass die Automobilhersteller ihre Fahrzeugmodelle mit einer ganzen Motorenpalette anzubieten pflegen. Nach Möglichkeit sollen die für den Betrieb des jeweiligen Motors erforderlichen Komponenten gegen die der anderen Motoren ausgetauscht werden können. Dabei sind die mechanischen Rahmenbedingungen des jeweiligen Fahrzeugtyps, insbesondere die Abmessungen der Bodengruppe, einzuhalten.

Der vorliegenden Erfindung liegt daher die Aufgabe zugrunde, ein Modul anzugeben, welches aus einem Speicherkatalysator und einem Abgaskühler besteht, das die vorgenannten Bedingungen erfüllt.

Diese Aufgabe wird gelöst durch ein Modul mit den Merkmalen des Anspruchs 1.

Die wesentlichen Vorteile der vorliegenden Erfindung sind auf die Integration des Ausgangskonus des Abgaskühlers in den Eingangskonus des Speicherkatalysators zurückzuführen. Diesbezüglich ist zunächst zu nennen die dadurch ermöglichte Verkürzung der Bauform. Außerdem wird der Abgas-Gegendruck vermindert. Des weiteren ist zu nennen die optimale Handhabbarkeit, und zwar sowohl im Montagewerk als auch in den Werkstätten. Ein weiterer Vorteil ist darin zu sehen, dass durch Verändern der Zahl und der Durchmesser der Rohre des Rohrbündels die wärmeabgebende Oberfläche des Abgaskühlers in weiten Grenzen verändert werden kann. Ein weiterer Vorteil ist, dass durch den Querschnittsprung zwischen Abgaszuleitung zum Abgaskühler und den Rohren des Rohrbündels sowie zwischen den Rohren des Rohrbündels und dem Speicherkatalysator sowie durch den Speicherkatalysator selbst eine Reduzierung des in den Motorabgasen steckenden Lärms erreicht wird, so dass der erfindungsgemäße Modul die Wirkung eines handelsüblichen Vorschalldämpfers hat. Ein weiterer, wesentlicher Vorteil besteht darin, dass die Stirnfläche des katalytisch beschichteten Körpers im Speicherkatalysator nicht wie üblich nur im Zentrum angeströmt wird, sondern über die gesamte Fläche des Rohrbündels, was zu einer deutlichen Verbesserung der Speicherund Reinigungswirkung beiträgt.

Als letzter Vorteil kann angeführt werden, dass eine optimale Anströmung der Stirnfläche des Katalysatorkörpers erreicht wird.

Vorzugsweise besitzen Eingangskonus und Ausgangskonusansatz des Abgaskühlers im Bereich der Enden des Rohrbündels einen strömungsgünstigen Wulst. Dieser Wulst hat eine weitere Verringerung des Abgasgegendrucks zur Folge.

Gemäß einer Weiterbildung der Erfindung ist das Rohrbündel von einem Gehäuse umgeben, in dem Kühlflüssigkeit zirkuliert. Mit Hilfe von Kühlflüssigkeit lässt sich eine stärkere Kühlung erreichen als mit Hilfe von Luft. Außerdem lässt sich die Wärme der Kühlflüssigkeit beispielsweise zur Beheizung des Fahrgastraumes verwenden.

Vorzugsweise sind das Katgehäuse mit Eingangs- und Ausgangskonus und der Ausgangskonusansatz einstückig ausgeführt.

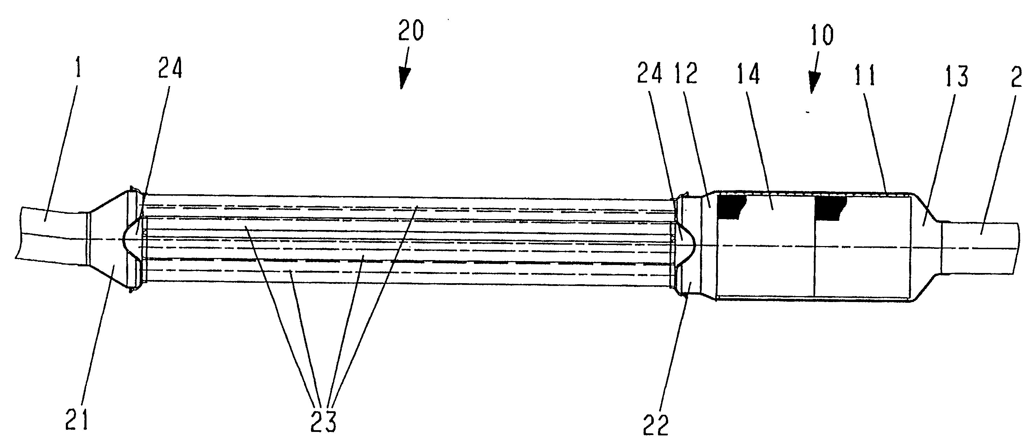

Anhand der Zeichnung soll die Erfindung in Form eines Ausführungsbeispiels näher erläutert werden.

Die Zeichnung zeigt rein schematisch ein Modul für die Abgasanlage eines GDI-Motors. Einem vom Motor kommenden Abgasrohr 1 ist zunächst ein Abgaskühler 20 und diesem ein Speicherkatalysator 10 nachgeordnet. Ein Abgasrohr 2 leitet die gereinigten Abgase zu den nachfolgenden Komponenten der Abgasanlage weiter.

Der Speicherkatalysator 10 besteht wie an sich bekannt aus einem katalytisch beschichteten Monolithen 14, der in einem Gehäuse 11 mit Eingangskonus 12 und Ausgangskonus 13 untergebracht ist.

Der Abgaskühler 20 umfasst im wesentlichen einen Eingangskonus 21, einen Ausgangskonusansatz 22 und dazwischen ein Rohrbündel 23. Die Rohre des Rohrbündels 23 liegen auf einer Kreislinie um das Zentrum von Eingangskonus 21 und Ausgangskonusansatz 22 herum. Die Zentren von Eingangskonus 21 und Ausgangskonusansatz 22 sind als strömungsgünstige Wülste 24 ausgeführt.

Der Ausgangskonusansatz 22 des Abgaskühlers 20 ist in den Eingangskonus 12 des Speicherkatalysators 10 integriert. Dadurch erhält man eine sehr kompakte Einheit Des weiteren treffen die in den Rohren des Rohrbündels 23 geführten Abgas-Teilströmungen großflächig auf die Stimfläche des Monolithen 14, so dass die bei vielen handelsüblichen Katalysatoren zu beobachtende Konzentration der Abgase im Zentrum des Monolithen mit all ihren Nachteilen vermieden wird, ohne dass es irgendwelcher zusätzlicher Einbauten oder anderer strömungsleitender Maßnahmen bedarf.

Beim Eintritt des vom Motor kommenden Störschalls aus dem Eingangskonus 21 in die Rohre des Rohrbündels 23 sowie beim Austritt aus den Rohren des Rohrbündels 23 in den Ausgangskonus 22 wird der in den Abgasen enthaltene Störschall durch Reflexion reduziert. Eine weitere Schallreduzierung erfolgt in den Kanälen des Monolithen 14. Das erfindungsgemäße Modul 10, 20 kann daher die Aufgaben eines handelsüblichen Vorschalldämpfers erfüllen.

Werden darüber hinaus die Rohre des Rohrbündels 23 mit unterschiedlichen Querschnitten ausgeführt, so kommt es - richtige Dimensionierung vorausgesetzt - im Bereich des Ausgangskonus 22 zur Interferenzbildung. Dadurch lassen sich störende Frequenzbereiche zusätzlich eliminieren.

## Patentansprüche

1. Modul für Abgasanlagen von Verbrennungsmotoren mit Benzin-Direkteinspritzung, umfassend:
- einen Speicherkatalysator (10) mit
-- einem Kat-Gehäuse (11) mit Eingangs- und Ausgangskonus (12, 13),
-- darin ein katalytisch aktiver Speicherkörper (14)
- und einen Abgaskühler (20) mit
-- einem Eingangskonus (21),
-- einem Ausgangskonusansatz (22)
-- und dazwischen ein Rohrbündel (23),
- der Ausgangskonusansatz (22) des Abgaskühlers (20) ist in den Eingangskonus (12) des Speicherkatalysators integriert.
**gekennzeichnet durch** das Merkmal:
- die Rohre des Rohrbündels (23) sind um ein Zentrum von Eingangskonus (21) und Ausgangskonusansatz (22) des Abgaskühlers herum positioniert.

2. Modul nach Anspruch 1, **gekennzeichnet durch** das Merkmal:
- Eingangskonus (21) und/oder Ausgangskonusansatz (22) des Abgaskühlers (20) besitzen im Bereich der Enden des Rohrbündels (23) einen strömungsgünstigen Wulst (24).

3. Modul nach Anspruch 1 oder 2, **gekennzeichnet durch** das Merkmal:
- Rohre des Rohrbündels (23) haben unterschiedliche Querschnitte.

4. Modul nach einem der Ansprüche 1 bis 3, **gekennzeichnet durch** die Merkmale:
- das Rohrbündel (23) ist von einem Gehäuse umgeben,
- in dem Gehäuse zirkuliert Kühlflüssigkeit.

5. Modul nach einem der Ansprüche 1 bis 4, **gekennzeichnet durch** das Merkmal:
- Kat-Gehäuse (11), Ausgangskonus (13), Eingangskonus (12) und Ausgangskonusansatz (22) sind einstückig ausgeführt.

## Claims

1. A module for exhaust gas installations of internal-combustion engines with direct petrol injection, comprising:
- a storage catalytic converter (10) having
-- a catalytic converter housing (11) with an input cone and an output cone (12, 13),
-- a catalytically active storage body (14) therein
- an exhaust-gas cooler (20) having
-- an input cone (21),
-- an output cone attachment (22)
-- and between them a bundle of tubes (23),
- the output cone attachment (22) of the exhaust-gas cooler (20) is integrated into the input cone (12) of the storage catalytic converter,
**characterised by** the feature:
- the tubes of the tube bundle (23) are positioned centrally of the input cone (21) and the output cone attachment (22) of the exhaust-gas cooler

2. A module according to Claim 1, **characterised by** the feature:
- the input cone (21) and/or the output cone attachment (22) of the exhaust-gas cooler (20) have in the vicinity of the ends of the tube bundle (23) a flow-promoting bulge (24).

3. A module according to Claim 1 or 2, **characterised by** the feature:
- tubes of the tube bundle (23) are of different cross-sections.

4. A module according to any one of Claims 1 to 3,
**characterised by** the features:
- the tube bundle (23) is surrounded by a housing,
- coolant circulates in the housing.

5. A module according to any one of Claims 1 to 4,
**characterised by** the feature:
- the catalytic converter housing (11), output cone (13), input cone (12) and output cone attachment (12) are formed in one piece.

## Revendications

1. Module pour pot d'échappement pour moteurs à combustion interne avec injection directe à essence, comprenant :
- un catalyseur de stockage (10) muni d'un boîtier de catalyseur (11) avec un cône d'entrée et un cône de sortie (12, 13),
- un corps de stockage (14) à activité catalytique, monté dans ledit boîtier,
- et un refroidisseur des gaz d'échappement (20) muni
-- d'un cône d'entrée (21),
-- d'un ajutage conique de sortie (22)
-- et d'un faisceau de tubes (23) disposés entre ceux-ci,
- l'ajutage conique de sortie (22) du refroidisseur des gaz d'échappement (20) est intégré dans le cône d'entrée (12) du catalyseur de stockage,
**caractérisé en ce que**
- les tubes du faisceau de tubes (23) sont positionnés autour d'un centre du cône d'entrée (21) et de l'ajutage conique de sortie (22) du refroidisseur des gaz d'échappement.

2. Module selon la revendication 1, **caractérisé en ce que**
- le cône d'entrée (21) et/ou l'ajutage conique de sortie (22) du refroidisseur des gaz d'échappement (20) comportent, dans la zone des extrémités du faisceau de tubes (23), un renflement (24) favorable à l'écoulement.

3. Module selon la revendication 1 ou 2, **caractérisé en ce que**
- les tubes du faisceau de tubes (23) présentent des sections différentes.

4. Module selon l'une quelconque des revendications 1 à 3, **caractérisé en ce que**
- le faisceau de tubes (23) est entouré par un boîtier,
- le liquide de refroidissement circule dans le boîtier.

5. Module selon l'une quelconque des revendications 1 à 4, **caractérisé en ce que**
- le boîtier du catalyseur (11), le cône d'entrée (13), le cône de sortie (12) et l'ajutage conique de sortie (22) sont réalisés en une seule pièce.
